# EUROPEAN PATENT APPLICATION

(11) **EP 3 069 841 A1**
(43) Date of publication of application: **21.09.2016**
(21) Application number: 15275072.5
(22) Date of filing: 18.03.2015
(51) Int. Cl.: B29C 35/02, B29C 70/54

(54) **THERMALLY INSULATING COVER**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed is a method and apparatus for producing a thermally insulating cover (28). The method comprises: providing a tool (10); positioning material (18) to be cured on a mould surface of the tool (10), thereby providing an assembly (16); attaching a plurality of temperature sensors (20) to the assembly (16) such that they have a spaced apart relationship to each other; heating the assembly (16) to cure the material (18); measuring temperatures experienced by the temperature sensors (20) during the heating process; using the temperature measurements, identifying regions of the assembly (16) that experience different heat-up rates to one another; and producing a thermally insulating cover (28) adapted to fit over the assembly (16), the cover (28) configured to provide different levels of thermal insulation to each of the identified regions of the assembly (16).

## Description

### FIELD OF THE INVENTION

The present invention relates to thermally insulating covers and the production thereof.

### BACKGROUND

Many aircraft components, including but not limited to the external skins of aircraft, are made of a composite material. The composite material may be a polymer matrix reinforced with fibres such as carbon or glass fibres.

Typically, to form an item from composite material, a layer of uncured composite material, for example in the form of "prepreg" sheets (i.e. "pre-impregnated" composite fibres including a matrix material such as epoxy), is laid against an upper surface of a mould tool. The composite material is then "bagged" and heated. Under the effect of heat, the resin polymerizes, permitting the fibre reinforcement to preserve the shape of the mould tool against which it is forced. The formed item is removed from the mould tool after being allowed to cool.

During the curing of the item, different parts of that item may experience different heat-up and/or cool down rates, and consequently may cure at different rates. As a result, stress may be set into the produced item.

### SUMMARY OF THE INVENTION

In a first aspect, the present invention provides a method of producing a thermally insulating cover. The method comprises: providing a mould tool; positioning material to be cured on a mould surface of the mould tool, thereby providing an assembly; attaching a plurality of temperature sensors to the assembly such that they have a spaced apart relationship to each other; heating the assembly with the temperature sensors attached thereto so as to cure, at least to some degree, the material; measuring temperatures experienced by the temperature sensors during the heating process; using the temperature measurements, identifying at least two regions of the assembly that experience different heat-up rates to one another during the heating process; and producing a thermally insulating cover adapted to fit over at least part of the assembly, the cover being such that, if the cover is fit over the at least part of the assembly, the cover provides different levels of thermal insulation to each of the identified regions of the assembly.

The cover may be such that, if the cover is fit over the at least part of the assembly, for an identified region of the assembly, the amount of thermal insulation provided to that region by the cover is dependent upon the heat-up rate experienced during the heating of the assembly by that identified region.

The cover may be such that, if the cover was fit over at least part of the assembly and the heating process was performed on the assembly with the cover fit thereto, for two different identified regions of the assembly, the difference between the heat-up rates experienced by those two regions would be reduced compared to if the cover was not present.

The cover may be such that, if the cover was fit over at least part of the assembly and the heating process was performed on the assembly with the cover fit thereto, each identified region of the assembly would experience substantially the same heat-up rate.

Different parts of the cover may have different thicknesses and thereby provide different levels of thermal insulation.

The cover may be such that, if the cover was fit over at least part of the assembly, the each of the different parts of the cover having different thicknesses would be positioned over a respective identified region of the assembly.

The cover may be made of a flexible material.

The cover may be made of a material that includes fibreglass.

The heating of the assembly may be performed such that each of the temperature sensors experiences a predetermined temperature for a predetermined time period.

The step of producing the cover may comprise using the temperature measurements, determining a specification for the cover, and producing the cover according to the determined specification.

The step of identifying at least two regions of the assembly that experience different heat-up rates to one another during the heating process may comprise: using the temperature measurements, determining a heat map of temperature of the assembly during the heating process, and, using the determined heat map, identifying the at least two regions of the assembly that experience different heat-up rates to one another during the heating process.

In a further aspect, the present invention provides a method of producing an object. The method comprises: producing a cover according to the method of any of the above aspects; providing a further mould tool; positioning further material to be cured on a mould surface of the further mould tool, thereby providing a further assembly; fitting the cover over at least part of the further assembly; and heating the further assembly with the cover applied thereto so as to cure, at least to some degree, the further material.

The further mould tool may be substantially the same as the mould tool and the further material to be cured is substantially the same as the material to be cured such that the further assembly is substantially the same as the assembly. The heating process performed on the further assembly may be substantially the same the heating process performed on the assembly.

In a further aspect, the present invention provides apparatus for producing a thermally insulating cover. The apparatus comprises: an assembly comprising a mould tool and material to be cured positioned on a mould surface of the mould tool; a plurality of temperature sensors attached to the assembly such that they have a spaced apart relationship to each other; heating means for heating the assembly with the temperature sensors attached thereto so as to cure, at least to some degree, the material; one or more processors configured to receive measurements of temperatures experienced by the temperature sensors during the heating process and, using the temperature measurements, identify at least two regions of the assembly that experience different heat-up rates to one another during the heating process; and means for producing a thermally insulating cover adapted to fit over at least part of the assembly, the cover being such that, if the cover is fit over the at least part of the assembly, the cover provides different levels of thermal insulation to each of the identified regions of the assembly.

In a further aspect, the present invention provides a thermally insulating cover produced using a method according any of the above aspects.

### BRIEF DESCRIPTION OF THE DRAWINGS

Figure 1 is a schematic illustration (not to scale) showing a perspective view of an object that is to be produced;
Figure 2 is a process flow chart showing certain steps of a process of producing the object;
Figure 3 is a schematic illustration (not to scale) showing a perspective view of a mould tool used to produce the object;
Figure 4 is a schematic illustration (not to scale) showing a perspective view of a first assembly including the mould tool;
Figure 5 is a schematic illustration (not to scale) showing the first assembly within an autoclave;
Figure 6 is a schematic illustration (not to scale) showing an example of an insulating cover produced during the process of producing the object; and
Figure 7 is a schematic illustration (not to scale) of a cross section through a second assembly including the mould tool.

### DETAILED DESCRIPTION

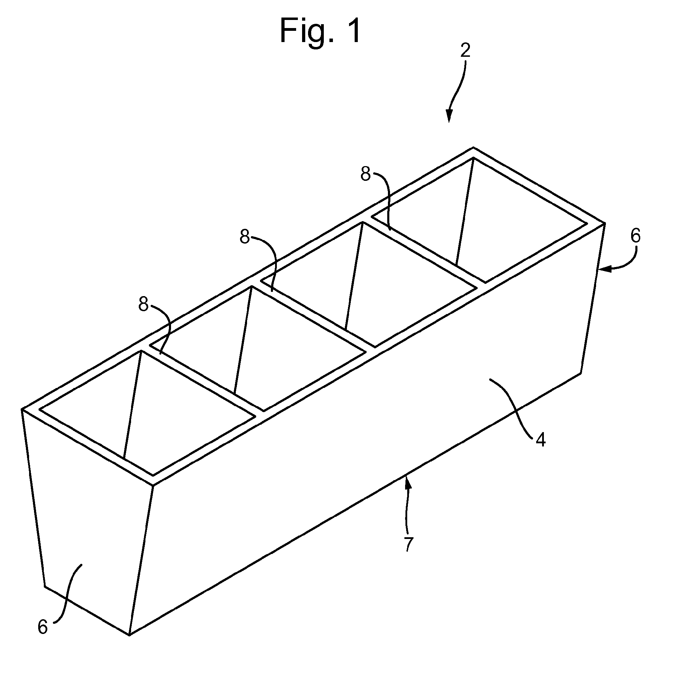

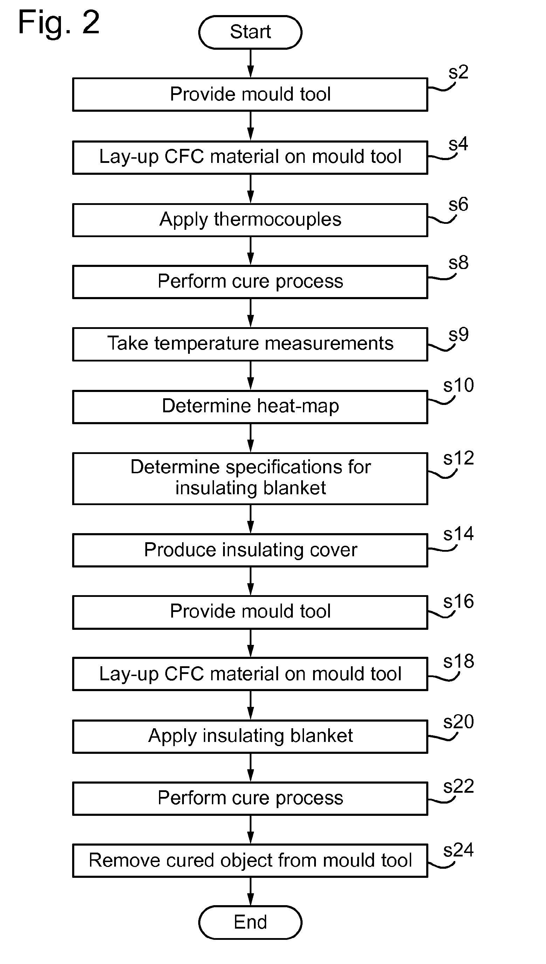

Figure 1 is a schematic illustration (not to scale) showing a perspective view of an object 2 that is to be produced. An embodiment of a method of producing the object 2 is described in more detail later below with reference to Figure 2.

In this embodiment, the object 2 is a component part of an aircraft rudder. The object 2 is made of a carbon fibre composite CFC) material, i.e. a polymer matrix reinforced with carbon fibres.

The object 2 comprises two opposing side walls 4, two end walls 6, a bottom wall 7, and a plurality of ribs 8.

The side walls 4 are fixedly attached to the bottom wall 7 along opposite side edges of the bottom wall 7. The end walls 6 are fixedly attached to the bottom wall 7 along opposite end edges of the bottom wall 7 such that they connect together the side walls 4. The ribs 8 are spaced apart along the length of the object 2 and connect together the two opposing side walls 4. The ribs 8 are disposed between, and are substantially parallel with, the end walls 6.

Figure 2 is a process flow chart showing certain steps of a process of producing the object 2.

At step s2, a mould tool is provided.

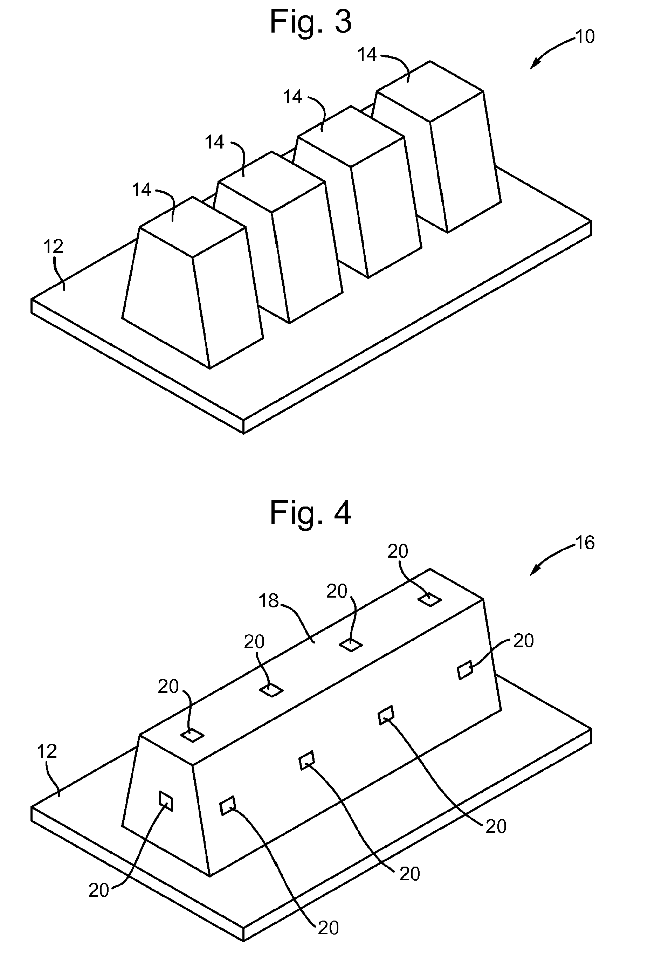

Figure 3 is a schematic illustration (not to scale) showing a perspective view of the mould tool 10.

In this embodiment, the mould tool 10 comprises a base plate 12 and a plurality of blocks 14 fixed to a top surface of the base plate 12.

The base plate 12 is made of aluminium. Each of the blocks 14 is a trapezoidal prism in shape. The blocks 14 are substantially the same size and shape as one another. The blocks 14 are made of aluminium.

In this embodiment, the blocks 14 are arranged in a straight line along an upper surface of the base plate 12. The blocks 14 are spaced apart such that there is a space between each pair of adjacent blocks 14.

The blocks 14 may be fixed to the base plate 12 in any appropriate way. Preferably, the base plate 12 comprises a linear key extending from its upper surface, and each block 14 comprises a corresponding linear keyway along its lower surface. Thus, a block 14 may fixed to the base plate 12 by inserting the key of the base plate 12 into the keyway of that block 14 and sliding that block 14 along the linear key into its desired position. Further fixing means (e.g. an adhesive) may then be used to further fix the position of the block 14 relative to the base plate 12. The key and keyways have complementary shapes and may, for example, have T-shaped cross-sections.

At step s4, layers of uncured CFC material (hereinafter referred to as the "first CFC material") are applied to the mould surface of the mould tool 10. This may be performed by laying "prepreg" sheets (i.e. "pre-impregnated" composite fibres including a matrix material such as epoxy) against the upper surface of the mould tool 10.

At step s6, a plurality of thermocouples is applied to the first CFC material. The mould tool 10 with the first CFC material and the plurality of thermocouples applied thereto is hereinafter referred to as the "first assembly".

Figure 4 is a schematic illustration (not to scale) showing a perspective view of the first assembly 16.

In this embodiment, the first CFC material 18 covers at least the upper surface of the blocks 14. The thermocouples 20 are arranged on the outer surface of the first CFC material 18 in a spaced apart relation. The thermocouples 20 may be fixed to the first CFC material 18 in any appropriate way, for example, using an adhesive.

In some embodiments, the thermocouples 20 are positioned over the outer surface of the first CFC material 18 such that they are substantially uniformly spaced apart. In some embodiments, the thermocouples 20 may be concentrated (i.e. more closely spaced) at or proximate to certain regions on the outer surface of the first CFC material 18. In some embodiments, object features of the object 2 may be identified and the thermocouples 20 may be positioned on the outer surface of the first CFC material 18 such that at least one thermocouple 20 is located at or proximate to the identified object features. In some embodiments, the thermocouples 20 may be concentrated at or proximate to an identified object feature. Examples of such object features include, but are not limited to, a thickest part of the object 2, a thinnest part of the object 2, and end or edge of the object 2, and an attachment point on the object 2 where the object 2 is to be attached to a different entity.

At step s8, the first assembly 16 is placed into an autoclave and a first curing process is performed on the first assembly 16 so as to cure the first CFC material 18.

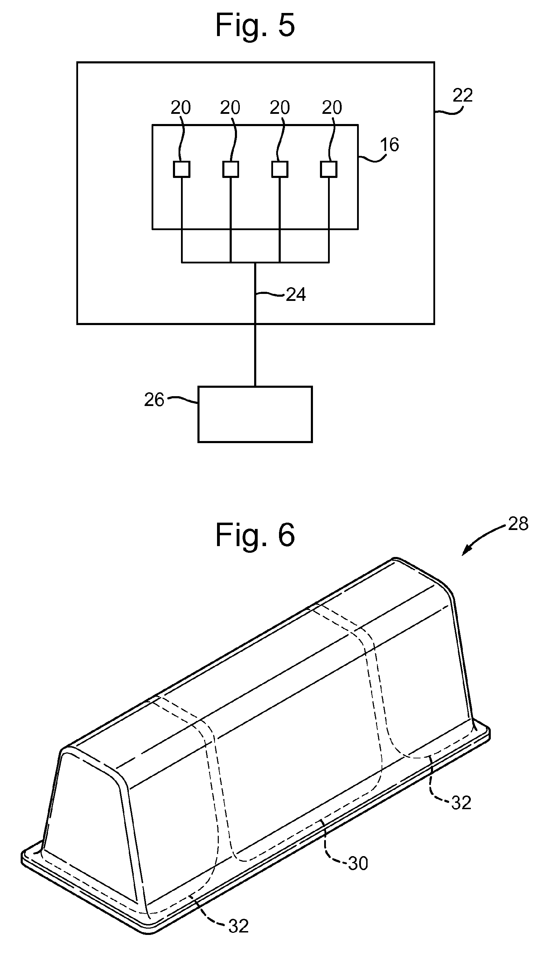

Figure 5 is a schematic illustration (not to scale) showing the first assembly 16 within the autoclave 22.

Each of the thermocouples 20 is attached, via an electrical wire 24, to a processor 26. The processor 26 is located outside the autoclave 22. This coupling of the thermocouples 20 to the processor 26 is such that measurements of the temperatures experienced by the thermocouples 20 whilst inside the autoclave 22 may be sent from the thermocouples 20 to the processor 26. The processor 26 is configured to store and process the received temperature measurements as described in more detail later below.

The first curing process is performed such that the first CFC material 18 is fully cured. However, in other embodiments, the first curing process may comprise only partially curing the first CFC material 18. In some embodiments, the first curing process comprises operating the autoclave 22 such that its contents (i.e. the first assembly 16) experience a predetermined temperature (e.g. 180°C, 185°C, or 190°C) for a predetermined time period (for example, at least 2 hours, or for between 2 and 3 hours). In some embodiments, the performance of the first cure cycle may be controlled using measurements taken by the thermocouples 20.

At step s9, during the first curing process, the thermocouples 20 take temperature measurements. These temperature measurements are sent from the thermocouples 20 to the processor 26.

At step s10, the processor 26 processes the temperature measurements taken by the thermocouples 20 to produce a heat map of temperature across the first assembly 16. This heat map is a graphical representation of the temperature measurements across the first assembly in which the individual temperature values, or ranges of temperature values, are represented by different colours. In some embodiments, an output from autoclave thermal capture software is provided in a different appropriate format instead of or in addition to a heat map.

In some embodiments, a heat map of heat-up rates across the first assembly 16 is produced instead of or in addition to the heat map of temperature. In some embodiments, multiple heat maps may be generated, for example, for each of a plurality of time-steps during the first curing process.

In this embodiment, the heat map is used to identify one or more regions of the first assembly 16 that have a relatively high heat-up rate. For example, those regions of the first assembly 16 that have a heat-up rate above a first predetermined threshold may be identified. Typically, regions of the first assembly 16 that have relatively high heat-up rates are proximate to the edges of the first assembly 16.

Also, the heat map is used to identify one or more regions of the first assembly 16 that have a relatively low heat-up rate. For example, those regions of the first assembly 16 that have a heat-up rate below a second predetermined threshold may be identified. The second predetermined threshold may be less than or equal to the first predetermined threshold. Typically, regions of the first assembly 16 that have relatively low heat-up rates are at or proximate to the central region the first assembly 16.

At step s12, using the heat map, the processor 26 determines a specification for an insulating cover. The insulating cover is described in more detail later below. The processor 26 may specify the insulating cover based on or using specifications or characteristics of appropriate insulating materials from which the cover is to be made.

At step s14, an insulating cover is produced according to the specification determined at step s12.

Figure 6 is a schematic illustration (not to scale) showing an example of an insulating cover 28 produced at step s14.

In this embodiment, the insulating cover 28 is a flexible cover (e.g. a blanket or a jacket) made of a thermally insulating material. Examples of such insulating materials include, but are not limited to, fibreglass, dry peel ply, PTFE coated glasscloth, and AIRWEAVE (Trademark) Breather material.

In this embodiment, the thickness of the thermally insulating material that forms the insulating cover 28 is non-uniform. In particular, the insulating cover 28 includes regions where the thermally insulating material is relatively thick (said regions are hereinafter referred to as "thick regions" and are indicated in Figure 6 by the reference numeral 30). Also, the insulating cover 28 includes regions where the thermally insulating material is relatively thin (said regions are hereinafter referred to as "thin regions" and are indicated in Figure 6 by the reference numeral 32).

The insulating cover 28 is shaped to fit over at least part of the first assembly 16, in particular, at least part of the first CFC material 18. The insulating cover 28 is such that, if the insulting cover 28 was fitted over the first assembly 16, the thick regions 30 of the insulating cover 28 would be positioned over those regions of the first CFC material 18 that, during the first cure cycle, experienced relatively high heat-up rates. Also, the insulating cover 28 is such that, if the insulting cover 28 was fitted over the first assembly 16, the thin regions 32 of the insulating cover 28 would be positioned over those regions of the first CFC material 18 that, during the first cure cycle, experienced relatively low heat-up rates.

In this embodiment, the relative thicknesses of the thick regions 30 and the thin regions 32 of the insulating cover 28 are such that, if the insulting cover 28 was fitted over the first assembly 16 and the first curing process was performed on the first assembly 16 with the insulating cover 28 thereon, smoothing of the heat-up rates across the first CFC material 18 would occur compared to if the insulating cover 28 was not present.

In other words, if the insulting cover 28 was fitted over the first assembly 16 and the first curing process was performed on the first assembly 16 with the insulating cover 28 thereon, the insulting cover 28 would tend to reduce the difference between a heat-up rate experienced by a region of the first assembly 16 that has a relatively low heat-up rate and a heat-up rate experienced by region that has a relatively high heat-up rate. In other words, the insulating cover 28 would tend to reduce the differences between heat-up rates of different regions of the first assembly 16.

Preferably, the relative thicknesses of the thick regions 30 and the thin regions 32 of the insulating cover 28 are such that, if the insulting cover 28 was fitted over the first assembly 16 and the first curing process was performed on the first assembly 16 with the insulating cover 28 thereon, each part of the first CFC material 18 would experience substantially the same heat-up rate. The thicknesses of the thick regions 30 and the thin regions 32 of the insulating cover 28 may be determined using the heat map determined at step s10.

At step s16, the cured first CFC material 18 and the thermocouples 20 are then removed from the mould tool 10, and the mould tool 10 is prepared for the following method steps.

At step s18, layers of uncured CFC material (hereinafter referred to as the "second CFC material") are applied to the mould surface of the mould tool 10. Preferably, this is done in the same way as performed at step s4. In this embodiment, the mould tool 10 with the uncured first CFC material 18 applied to its upper surface is substantially the same as the mould tool 10 with the uncured second CFC material applied to its upper surface.

At step s20, the insulating cover 28 is applied over the surface of the second CFC material. The mould tool 10 with the second CFC material and the insulating cover 28 disposed thereon is hereinafter referred to as the "second assembly".

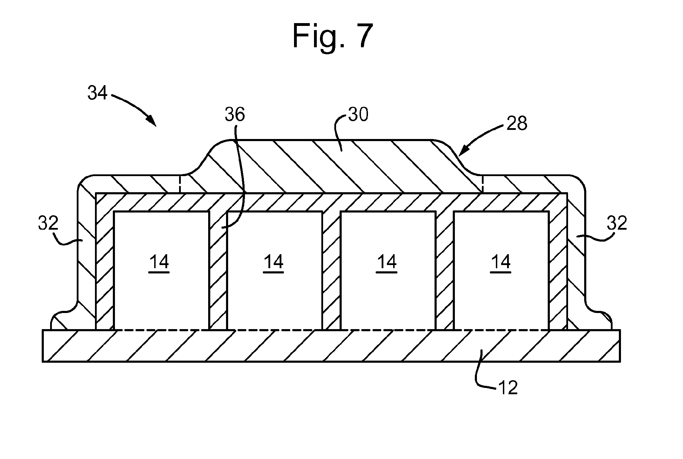

Figure 7 is a schematic illustration (not to scale) of a cross section through the second assembly 34.

In this embodiment, the second CFC material 36 is sandwiched between the mould tool 10 and the insulating cover 28.

The insulting cover 28 is fitted over the second assembly 34 such that 16 the thick regions 30 of the insulating cover 28 are positioned over those regions of the second CFC material 36 that are located on the mould tool 10 at the same position as those regions of the first CFC material 18 that, during the first cure cycle, experienced relatively high heat-up rates.

Also, the insulting cover 28 is fitted over the second assembly 34 such that 16 the thin regions 32 of the insulating cover 28 are positioned over those regions of the second CFC material 36 that are located on the mould tool 10 at the same position as those regions of the first CFC material 18 that, during the first cure cycle, experienced relatively low heat-up rates.

At step s22, the second assembly is placed into the autoclave 22 and a second curing process is performed on the second assembly so as to cure the second CFC material.

In this embodiment, during the second curing process, the position and orientation of the mould tool 10 in the autoclave 22 is substantially the same as the position and orientation of the mould tool 10 in the autoclave 22 during the first curing process.

The second curing process may be substantially identical to the first curing process, for example, the second curing process may comprise operating the autoclave 22 such that its contents experience the predetermined temperature for the predetermined time period. In some embodiments, the heat-up rate of the autoclave 22, the predetermined temperature, and/or the predetermined time period of the second curing process may be modified (e.g. increased) to account for the insulating cover 28. Such modifications may be determined using the specification of the insulating cover 28.

Advantageously, the insulating cover 28 tends to provide that each part of the second CFC material 36 experiences substantially the same heat-up rate during the second curing process. Thus, all parts of the second CFC material 36 tend to cure at substantially the same rate. This tends to reduce stresses within the cured second CFC material 36 (i.e. within the object 2).

At step s22, after the second curing process has been performed, the second assembly 34 is allowed to cool and the cured second CFC material 36 is removed from the mould tool 10, thereby providing the object 2.

Thus, a process of producing the object 2 is provided.

Conventionally, during the curing of an item (e.g. a CFC item), different parts of that item may experience different heat-up and/or cool down rates, and consequently may cure at different rates. Advantageously, the above described method and apparatus tends to reduce or eliminate this problem. The above described method and apparatus may be used to provide that an object being cured experiences a uniform heat-up rate over the whole of that object. This advantageously tends to reduce stresses within the cured object which, in turn, tends to improve object performance and reduce failure rates and associated costs.

Apparatus, including the processor, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

It should be noted that certain of the process steps depicted in the flowchart of Figure 2 and described above may be omitted or such process steps may be performed in differing order to that presented above and shown in Figure 2. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the produced object is a component part of an aircraft rudder as described in more detail earlier above with reference to Figure 1. The object is made of a CFC material. However, in other embodiments, the object is a different type of object. In some embodiments, the object has a different shape and/or dimensions to those described earlier above. Also, in some embodiments, the object is made of a different type of material that is to undergo a curing process.

In the above embodiments, the mould tool used to form the object is as described in more detail earlier above with reference to Figure 3. Also, the mould tool is made of aluminium. However, in other embodiments, the mould tool has a different shape and/or dimensions to those described earlier above. Also, in some embodiments, the mould tool is made of a different type of material, i.e. a material other than aluminium.

In the above embodiments, thermocouples are used to take temperature measurements during the first curing cycle. However, in other embodiments, a different type of temperature sensor is used.

In the above embodiments, the thermocouples are fixed to an outer surface of the first CFC material. However, in other embodiments, one or more of the thermocouples is fixed to an inner surface of the CFC material that is opposite to its outer surface. In some embodiments, one or more of the thermocouples is embedded at least to some extent in the CFC material between the outer and inner surfaces of that CFC material.

In the above embodiments, a heat map of the fir CFC material as it cures is determined. This heat map is used to identify regions of the first CFC material that have relatively high and relatively low heat-up rates. Any appropriate thresholds or criteria may be used to define the relatively high and/or relatively low heat-up rates. However, in other embodiments a heat map is not determined and the regions of the first CFC material that have relatively high and relatively low heat-up rates are identified in a different appropriate way.

## Claims

1. A method of producing a thermally insulating cover (28), the method comprising:
providing a mould tool (10);
positioning material (18) to be cured on a mould surface of the mould tool (10), thereby providing an assembly (16);
attaching a plurality of temperature sensors (20) to the assembly (16) such that they have a spaced apart relationship to each other;
heating the assembly (16) with the temperature sensors (20) attached thereto so as to cure, at least to some degree, the material (18);
measuring temperatures experienced by the temperature sensors (20) during the heating process;
using the temperature measurements, identifying at least two regions of the assembly (16) that experience different heat-up rates to one another during the heating process; and
producing a thermally insulating cover (28) adapted to fit over at least part of the assembly (16), the cover (28) being such that, if the cover (28) is fit over the at least part of the assembly (16), the cover (28) provides different levels of thermal insulation to each of the identified regions of the assembly (16).

2. A method according to any of claim 1, wherein the cover (28) is such that, if the cover (28) is fit over the at least part of the assembly (16), for an identified region of the assembly (16), the amount of thermal insulation provided to that region by the cover (28) is dependent upon the heat-up rate experienced during the heating of the assembly (16) by that identified region.

3. A method according to claim 1 or 2, wherein the cover (28) is such that, if the cover (28) was fit over at least part of the assembly (16) and the heating process was performed on the assembly (16) with the cover (28) fit thereto, for two different identified regions of the assembly (16), the difference between the heat-up rates experienced by those two regions would be reduced compared to if the cover (28) was not present.

4. A method according to claim 3, wherein the cover (28) is such that, if the cover (28) was fit over at least part of the assembly (16) and the heating process was performed on the assembly (16) with the cover (28) fit thereto, each identified region of the assembly (16) would experience substantially the same heat-up rate.

5. A method according to any of claims 1 to 4, wherein different parts (30, 32) of the cover (28) have different thicknesses and thereby provide different levels of thermal insulation.

6. A method according to claim 5, wherein the cover (28) is such that, if the cover (28) was fit over at least part of the assembly (16), each of the different parts (30, 32) of the cover (28) having different thicknesses would be positioned over a respective identified region of the assembly (16).

7. A method according to any of claims 1 to 6, wherein the cover (28) is made of a flexible material.

8. A method according to any of claims 1 to 7, wherein the cover (28) is made of a material that includes fibreglass.

9. A method according to any of claims 1 to 8, wherein the heating of the assembly (16) is performed such that each of the temperature sensors (20) experiences a predetermined temperature for a predetermined time period.

10. A method according to any of claims 1 to 9, wherein the step of producing the cover (28) comprises:
using the temperature measurements, determining a specification for the cover (28); and
producing the cover (28) according to the determined specification.

11. A method according to any of claims 1 to 10, wherein the step of identifying at least two regions of the assembly (16) that experience different heat-up rates to one another during the heating process comprises:
using the temperature measurements, determining a heat map of temperature of the assembly (16) during the heating process; and
using the determined heat map, identifying the at least two regions of the assembly (16) that experience different heat-up rates to one another during the heating process.

12. A method of producing an object, the method comprising:
producing a cover (28) according to the method of any of claims 1 to 11;
providing a further mould tool (10);
positioning further material (36) to be cured on a mould surface of the further mould tool (10), thereby providing a further assembly (34);
fitting the cover (28) over at least part of the further assembly (34); and
heating the further assembly (34) with the cover (28) applied thereto so as to cure, at least to some degree, the further material (36).

13. A method according to claim 12, wherein:
the further mould tool (10) is substantially the same as the mould tool (10) and the further material (36) to be cured is substantially the same as the material (18) to be cured such that the further assembly (16) is substantially the same as the assembly (16); and
the heating process performed on the further assembly (34) is substantially the same the heating process performed on the assembly (16).

14. Apparatus for producing a thermally insulating cover (28), the apparatus comprising:
an assembly (16) comprising:
a mould tool (10); and
material (18) to be cured positioned on a mould surface of the mould tool (10);
a plurality of temperature sensors (20) attached to the assembly (16) such that they have a spaced apart relationship to each other;
heating means (22) for heating the assembly (16) with the temperature sensors (20) attached thereto so as to cure, at least to some degree, the material (18);
one or more processors (26) configured to receive measurements of temperatures experienced by the temperature sensors (20) during the heating process and, using the temperature measurements, identify at least two regions of the assembly (16) that experience different heat-up rates to one another during the heating process; and
means for producing a thermally insulating cover (28) adapted to fit over at least part of the assembly (16), the cover (28) being such that, if the cover (28) is fit over the at least part of the assembly (16), the cover (28) provides different levels of thermal insulation to each of the identified regions of the assembly (16).

15. A thermally insulating cover (28) produced using a method according any of claims 1 to 13.
